# EUROPEAN PATENT APPLICATION

(11) **EP 3 828 600 A1**
(43) Date of publication of application: **02.06.2021**
(21) Application number: 20208630.2
(22) Date of filing: 19.11.2020
(51) Int. Cl.: G02B 3/08, G01J 1/04, G08B 13/193

(54) **FRESNEL LENS UNIT SENSING APPARATUS**

(30) Priority: 26.11.2019 CN 201911173866
(71) Applicant: Boly Media Communications (Shenzhen) Co., Ltd., Shenzhen, Guangdong 518109 (CN)
(72) Inventor: HU, Xiaoping, Shenzhen Guangdong 518109 (CN)
(74) Representative: Manitz Finsterwald Patent- und Rechtsanwaltspartnerschaft mbB

(57) **Abstract**

Disclosed is a Fresnel lens unit sensing apparatus having at least two infrared sensing units and at least two Fresnel lens units. The Fresnel lens unit is divided into at least a first Fresnel lens unit and a second Fresnel lens unit. The second Fresnel lens unit is arranged on a side of the first Fresnel lens unit. The infrared sensing unit is also correspondingly divided into at least a first infrared sensing unit and at least one second infrared sensing unit. The first infrared sensing unit is located at the focal point of the first Fresnel lens unit, and the second infrared sensing unit is arranged at the focal point of corresponding second infrared sensing unit. When the sensing object is placed in different positions, there is always an infrared sensing unit that can obtain a relatively large signal, avoiding signal attenuation caused by an unfavorable angle.

## Description

### TECHNICAL FIELD

The present disclosure relates to infrared sensing devices, in particular to Fresnel lens unit sensing apparatus.

### BACKGROUND

Infrared Fresnel lens unit sensing systems, whose sensing range directly affect their application and use cost, are general sending devices used in current monitoring technical field, especially for outdoor monitoring (such as hunting monitoring, mine monitoring, open-air construction site monitoring and other applications) which requires a Fresnel lens unit sensing system with a large sensing range. A Fresnel lens unit sensing system, disclosed in a Chinese patent (CN 201984167U) which has been authorized patent right on September 21, 2011, adopts edge detection instead of interior point detection in a Fresnel lens unit system to increase the detection distance of existing Fresnel lens unit sensing systems by approximately two times.

However, the signal intensity at the edge of the Fresnel lens unit attenuates by cos⁴Φ when it reaches a passive infrared sensor, where Φ is the angle between edge infrared rays and the lens axis. Therefore, it is difficult currently to balance the distance of a central region and an edge sensing distance.

### SUMMARY

A novel Fresnel lens unit sensing apparatus provided in the present disclosure for improving sensing distance and sensing area.

A Fresnel lens unit sensing apparatus provided in an embodiment of the present disclosure may include:
a sensor base configured to install an infrared sensing unit;
at least two infrared sensing units divided into at least one first infrared sensing unit and at least one second infrared sensing unit, the first infrared sensing unit and the second infrared sensing unit being installed in the sensor base, the second infrared sensing unit being located to a side of the first infrared sensing unit and being arranged obliquely relative to the first infrared sensing unit;
a lens base configured to install a Fresnel lens unit; and
at least two Fresnel lens units divided into at least one first Fresnel lens unit and a second Fresnel lens unit, the first Fresnel lens unit being located above the first infrared sensing unit, the second Fresnel lens unit being located on a side of the first Fresnel lens unit and being arranged obliquely with respect to the first Fresnel lens unit;
the first infrared sensing unit being at least located on the focal point of the first Fresnel lens unit, and one second infrared sensing unit being correspondingly provided with at least one second Fresnel lens unit and being arranged at the focal point of corresponding second Fresnel lens unit.

In an embodiment, each second infrared sensing unit and corresponding second Fresnel lens unit are arranged on both sides of the first infrared sensing unit and the first Fresnel lens unit in a cross manner.

In an embodiment, the surface of the infrared sensing unit at the focal point of its corresponding Fresnel lens unit is perpendicular to the optic axis of its corresponding Fresnel lens unit.

In an embodiment, the sensor base has a first mounting surface and at least one second mounting surface, the first infrared sensing unit is mounted on the first mounting surface, the second mounting surface is inclined to the first mounting surface, the second infrared sensing unit is mounted on the second mounting surface; and the second mounting surface is closer to the sensing object than the first mounting surface.

In an embodiment, the second infrared sensing unit and the second Fresnel lens unit are both more than two, wherein the two second infrared sensing units are oppositely arranged on two sides of one first infrared sensing unit, and two second Fresnel lens units are oppositely arranged on two sides of one first Fresnel lens unit.

In an embodiment, there are more than two second mounting surfaces, the second mounting surfaces are distributed on both sides of the first mounting surface, and the first mounting surface and the second mounting surface form a spherical, groove-shaped, secondary cylindrical, or at-least-three-continuous-folded-surface structure.

In one embodiment, the second infrared sensing unit and the second Fresnel lens unit are both more than three, wherein the three second infrared sensing units are arranged around the outer circumferential direction of the first infrared sensing unit, and the three second Fresnel lens units are arranged around the outer circumferential direction of the first Fresnel lens unit.

In an embodiment, the second infrared sensing unit and the second Fresnel lens unit are both four, wherein the four second infrared sensing units are symmetrically distributed around the first infrared sensing unit, and the four second Fresnel lens units are symmetrically distributed around the first Fresnel lens unit.

In an embodiment, there are more than three second mounting surfaces, and the first mounting surface and the second mounting surface form a quadric groove-shaped, quadratic trapezoidal tapered groove-shaped, or four-sided trapezoidal groove-shaped structure.

In an embodiment, the sensor base is a flexible circuit board, the first infrared sensing unit and the second infrared sensing unit are mounted on a flexible circuit board, and the flexible circuit board is bent or folded such that the second infrared sensing unit is inclined relative to the first infrared sensing unit.

With the Fresnel lens unit sensing apparatus according to the above embodiment, which is implemented by at least two infrared sensing units and at least two Fresnel lens units, each infrared sensing unit being at least provided with one Fresnel lens unit, and the Fresnel lens unit being at least divided into a first Fresnel lens unit and a second Fresnel lens unit, and the second Fresnel lens unit being located on a side of the first Fresnel lens unit, infrared rays emitted by a sensing object can be received from different angles, increasing the sensing distance and range of the infrared rays. Further, by means of dividing the infrared sensing unit into at least a first infrared sensing unit and at least a second infrared sensing unit, the first infrared sensing unit being arranged at the focal point of the first Fresnel lens unit and the second infrared sensing unit being on the focal point of corresponding second Fresnel lens unit, there is always an infrared sensing unit obtaining a relatively large signal when the sensing object is in different positions, avoiding signal attenuation caused by the unfavorable angle. Moreover, since the infrared sensing unit is centrally arranged on the sensor base such as a concave groove, resulting in small volume and subsequent convenience for integrated processing. In addition, multiple Fresnel lens units are also integrated on the lens base, obtaining low cost and convenience for processing.

### BRIEF DESCRIPTION OF THE DRAWINGS

FIG. 1 is a schematically structural diagram of a Fresnel lens unit sensing apparatus according to an embodiment of the present disclosure; and
FIG. 2 is a schematically structural diagram of a Fresnel lens unit sensing apparatus according to another embodiment of the present disclosure.

### DETAILED DESCRIPTION

The present disclosure will be further described in detail below through specific embodiments with reference to the accompanying drawings. Common or similar elements are referenced with like or identical reference numerals in different embodiments. Many details described in the following embodiments are for the purpose of better understanding the present disclosure. However, those skilled in the art can realize with minimal effort that some of these features can be omitted in different cases or be replaced by other elements, materials and methods. For clarity some operations related to the present disclosure are not shown or illustrated herein so as to prevent the core from being overwhelmed by excessive descriptions. For those skilled in the art, such operations are not necessary to be explained in detail, and they can fully understand the related operations according to the description in the specification and the general technical knowledge in the field.

In addition, the features, operations or characteristics described in the specification may be combined in any suitable manner to form various embodiments. At the same time, the steps or actions in the described method can also be sequentially changed or adjusted in a manner that can be apparent to those skilled in the art. Therefore, the various sequences in the specification and the drawings are only for the purpose of describing a particular embodiment, and are not intended to be an order of necessity, unless otherwise stated one of the sequences must be followed.

The serial numbers of components herein, such as "first", "second", etc., are only used to distinguish the described objects and do not have any order or technical meaning. The terms "connected", "coupled" and the like here include direct and indirect connections (coupling) unless otherwise specified.

A Fresnel lens unit sensing apparatus according to an embodiment of the present disclosure, depending on the characteristics of a Fresnel lens unit having strong signal of incident angle at the center and weak single of incident angle at the edge, is equipped with at least two infrared sensing units and at least two Fresnel lens units, wherein each infrared sensing unit corresponds to at least one Fresnel lens unit to increase sensing distance and sensing area.

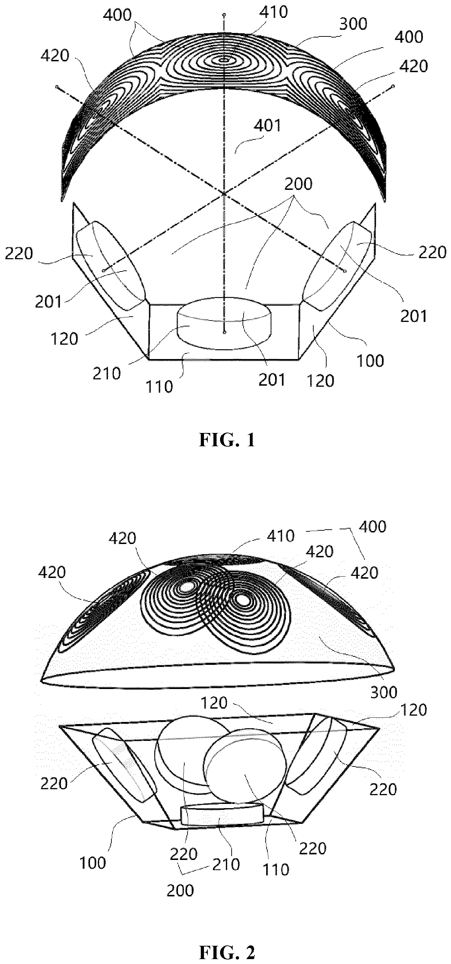

Please refer to FIG. 1 and FIG. 2. To illustrate the positional relationship between an infrared sensor unit and a Fresnel lens unit, transparent processing is performed on a sensor base in FIG. 2 so that the sensor base and an arrangement at the center can be seen. Since a lens base itself has light-admitting quality, a certain degree of infrared light transparency is possessed.

The Fresnel lens unit sensing apparatus includes a sensor base 100, at least two infrared sensing units 200, a lens base 300 and at least two Fresnel lens units 400.

The sensor base 100 is used to install the infrared sensing unit 200. The lens base 300 is used to install the Fresnel lens unit 400. The sensor base 100 and the lens base 300 can adopt various supporting structures. In the embodiment shown in FIG. 1 and other embodiments, as an example of the sensor base 100, the sensor base 100 may be a flexible circuit board, the first infrared sensing unit 210 and the second infrared sensing unit 220 are installed on the flexible circuit board. The flexible circuit board is bent or folded, so that the second infrared sensing unit 220 is tilted relative to the first infrared sensing unit 210; for example, the flexible circuit board is folded or bent into the shape of the groove shown in FIG. 1.

Please refer to FIG. 1 and FIG. 2, the infrared sensing unit 200 is at least divided into at least one first infrared sensing unit 210 and at least one second infrared sensing unit 220. The first infrared sensing unit 210 and the second infrared sensing unit 220 are installed on the sensor base 100, and the second infrared sensing unit 220 is located on a side of the first infrared sensing unit 210 and is arranged obliquely to the first infrared sensing unit 210.

Correspondingly, please refer to FIG. 1 and FIG.2, the Fresnel lens unit 400 is at least divided into at least a first Fresnel lens unit 410 and a second Fresnel lens unit 420. The first Fresnel lens unit 410 is arranged above the first infrared sensing unit 210, and the second Fresnel lens unit 420 is located on a side of the first Fresnel lens unit 410 and is arranged obliquely to the first Fresnel lens unit 410.

The first infrared sensing unit 210 is located at least on the focal point of a first Fresnel lens unit 410, and one second infrared sensing unit 220 is at least correspondingly provided with one second Fresnel lens unit 420 and is located corresponding to the focal point of the second Fresnel lens unit 420.

The inclined second Fresnel lens unit 420 can receive the infrared rays emitted by a sensing object from different angles relative to the first Fresnel lens unit 410, thereby increasing the sensing distance and range of the infrared rays. The first infrared sensing unit 210 can receive the infrared rays transmitted by the first Fresnel lens unit 410, and the second infrared sensing unit 220 can receive the infrared rays transmitted by a corresponding second Fresnel lens unit 420. There is always an infrared sensing unit 200 that can obtain a relative large signal when the sensing object is in different positions, thereby avoiding signal attenuation caused by unfavorable angles. In addition, the infrared sensing unit 200 is centrally arranged on the sensor base 100, resulting in small volume and subsequently convenient integrated processing. A plurality of Fresnel lens units 400 are as well as integrated on the lens base 300, obtaining advantages of low cost and convenience for processing. The inclined second Fresnel lens unit 420 and the second infrared sensing unit 220 enable the entire structure of the apparatus to be more compact, reducing the volume of the apparatus.

Please refer to FIG. 1 and FIG. 2. In a further embodiment, each second infrared sensing unit 220 and its corresponding second Fresnel lens unit 420 are arranged on both sides of the infrared sensing unit 210 and the first Fresnel lens unit 410 in a cross manner. For example, when one second infrared sensing unit 220 is arranged on the left side of the first infrared sensing unit 210, a second Fresnel lens unit 420 corresponding to this second infrared sensing unit 220 is arranged on the right side of the first Fresnel lens unit 410, so that the line between this second infrared sensing unit 220 and its corresponding second Fresnel lens unit 420 is crossed over in space with the line between the first infrared sensing unit 210 and the first Fresnel lens unit 410. With such cross-arrangement, the apparatus can be more compact, facilitating the infrared sensing unit 200 being perpendicular to the optic axis of corresponding Fresnel lens unit 400 to obtain a better sensing effect.

For example, referring to FIG. 1 and FIG. 2, in an embodiment, the surface 201 of the infrared sensing unit 200 at the focal point of its corresponding Fresnel lens unit 400 is perpendicular to the optic axis 401 of the corresponding Fresnel lens unit 400 to obtain the largest signal and improve the sensing effect.

The installation of the infrared sensing unit 200 on the sensor base 100 can be flexibly changed according to the structure of the sensor base 100. Please refers to FIG. 1 and FIG. 2, in an embodiment, the sensor base 100 has a first mounting surface 110 and at least one second mounting surface 120, the first infrared sensing unit 210 is mounted on the first mounting surface 110, and the second infrared sensing unit 220 is installed on the second mounting surface 120. The first mounting surface and the second mounting surface refer to the surface of the sensor base 100 used to install the infrared sensor unit 200, and other parts of the sensor base 100 can be designed in any shape as required, for example, they can be designed to be plate-like in FIG. 1 and FIG. 2 to reduce the volume of the sensor base 100. And in other embodiments, the sensor base 100 may be blocky or other shape. Preferably, the second mounting surface is closer to the sensing object than the first mounting surface.

The number of the second mounting surfaces 120 corresponds to the second infrared sensing unit 220. In order to make the second infrared sensing unit 220 inclined relative to the first infrared sensing unit 210, in some embodiments, the second mounting surface 120 may be arranged to be inclined relative to the first mounting surface 110, as shown in FIG. 1 and FIG. 2.

In some embodiments, the number of the second infrared sensing unit 220 and the second Fresnel lens unit 420 may be one or more than two.

Please refer to FIG. 1, in an embodiment, there are more than two second infrared sensing units 220 and second Fresnel lens units 420. In this respect, two second infrared sensing units 220 are oppositely arranged on two sides of one first infrared sensing unit 210. Two second Fresnel lens units 420 are oppositely arranged on both sides of one first Fresnel lens unit 410.

Correspondingly, there are more than two second mounting surfaces 120, and the second mounting surfaces 120 are distributed on both sides of the first mounting surface 110. In the embodiment shown in FIG. 1, the first mounting surface 110 and the second mounting surface 120 form a groove shape. The shape formed by the first mounting surface 110 and the second mounting surface 120 is definitely not limited to the groove shape, as long as the shape can meet the installation requirements of the first infrared sensing unit 210 and the second infrared sensing unit 220, for example the shape can also be but not limited to a secondary cylindrical shape or a structure having at least three continuous folded-surfaces. Of course, the corresponding lens base 300 may also be but not limited to a groove shape, a secondary cylindrical shape, or a structure of at least three continuous folded surfaces, so as to match the Fresnel lens unit 400 with the corresponding infrared sensor unit 200.

In other embodiments, the second infrared sensing unit 220 and the second Fresnel lens unit 420 are both more than three. In order to facilitate the installation of the three or more second infrared sensing units 220, in one embodiment, there are more than three second mounting surfaces 120, and the first mounting surface 110 and the second mounting surface 120 are formed but not limited to in a spherical, quadric groove-shaped, quadratic trapezoidal tapered groove-shaped, or four-sided trapezoidal groove-shaped structure. The corresponding lens base 300 can definitely also be a spherical, quadric groove-shaped, quadratic trapezoidal tapered groove-shaped, or four-sided trapezoidal groove-shaped structure, matching the Fresnel lens unit 400 with corresponding infrared sensing unit 200.

In an embodiment, the three or more second infrared sensing units 220 can be arranged around the outer circumference of the first infrared sensing unit 210, and the three or more second Fresnel lens units 420 can be arranged around the outer circumference the first Fresnel lens unit 410. Correspondingly, the three or more second mounting surfaces 120 are symmetrically distributed around the first mounting surface 110.

For example, referring to FIG. 2, in an embodiment, the second infrared sensing unit 220 and the second Fresnel lens unit 420 are both four. In this respect, the four second infrared sensing units 220 are symmetrically distributed around the first infrared sensing unit 210, and the four second Fresnel lens units 420 are symmetrically distributed around the first Fresnel lens unit 410. In this embodiment, there are also four second mounting surfaces 120 which are symmetrically arranged around the first mounting surface 110 for mounting corresponding second infrared sensing units 220.

Although only one first infrared sensing unit 210 is shown in the aforesaid embodiments shown in FIG. 1 and FIG. 2, there may be two or more first infrared sensing units 210 in other embodiments.

One first infrared sensing unit 210 is provided correspondingly with one first Fresnel lens unit 410 and one second infrared sensing unit 220 is provided correspondingly with one second Fresnel lens unit 420 in the aforesaid embodiments shown in FIGS. 1 and 2; but in fact said one first infrared sensing unit 210 can also be provided with two or more first Fresnel lens unit 410, and said one second infrared sensing unit 220 can also be provided with two or more second Fresnel lens unit 420. Further, all kinds of Fresnel lens units disclosed in the aforesaid "A Fresnel lens unit sensing system" in the Chinese patent (CN 201984167U) which has been authorized patent right on September 21, 2011 can be applied to the embodiment(s) in the present disclosure so as to be used as the firth Fresnel lens unit 410 or the second Fresnel lens unit 420. In this embodiment, the first and second Fresnel lens units and the lens base are integrated into a composite Fresnel lens.

The principle and implementation manners of the present disclosure has been described above with reference to specific embodiments, which are merely provided for the purpose of understanding the present disclosure and are not intended to limit the present disclosure. It will be possible for those skilled in the art to make variations based on the principle of the present disclosure.

## Claims

1. A Fresnel lens unit sensing apparatus, comprising:
a sensor base configured to install an infrared sensing unit;
at least two infrared sensing units divided into at least one first infrared sensing unit and at least one second infrared sensing unit, the first infrared sensing unit and the second infrared sensing unit being installed in the sensor base, the second infrared sensing unit being located to a side of the first infrared sensing unit and being arranged obliquely relative to the first infrared sensing unit;
a lens base configured to install a Fresnel lens unit; and
at least two Fresnel lens units divided into at least one first Fresnel lens unit and a second Fresnel lens unit, the first Fresnel lens unit being located above the first infrared sensing unit, the second Fresnel lens unit being located on a side of the first Fresnel lens unit and being arranged obliquely with respect to the first Fresnel lens unit;
the first infrared sensing unit being at least located on a focal point of the first Fresnel lens unit, and one second infrared sensing unit being correspondingly provided with at least one second Fresnel lens unit and being arranged at the focal point of corresponding second Fresnel lens unit.

2. The Fresnel lens unit sensing apparatus according to claim 1, wherein each second infrared sensing unit and corresponding second Fresnel lens unit are arranged on both sides of the first infrared sensing unit and the first Fresnel lens unit in a cross manner.

3. The Fresnel lens unit sensing apparatus according to claim 1, wherein a surface of the infrared sensing unit at the focal point of its corresponding Fresnel lens unit is perpendicular to an optic axis of its corresponding Fresnel lens unit.

4. The Fresnel lens unit sensing apparatus according to claim 1, wherein the sensor base has a first mounting surface and at least one second mounting surface, the first infrared sensing unit is mounted on the first mounting surface, the second mounting surface is inclined to the first mounting surface, the second infrared sensing unit is mounted on the second mounting surface; and the second mounting surface is closer to the sensing object than the first mounting surface.

5. The Fresnel lens unit sensing apparatus according to claim 4, wherein the second infrared sensing unit and the second Fresnel lens unit are both more than two, wherein the two second infrared sensing units are oppositely arranged on two sides of one first infrared sensing unit, and two second Fresnel lens units are oppositely arranged on two sides of one first Fresnel lens unit.

6. The Fresnel lens unit sensing apparatus according to claim 4 or 5, wherein there are more than two second mounting surfaces, the second mounting surfaces are distributed on both sides of the first mounting surface, and the first mounting surface and the second mounting surface form a structure in a spherical, groove-shaped, secondary cylindrical, or at-least-three-continuous-folded-surface manner.

7. The Fresnel lens unit sensing apparatus according to claim 4, wherein the second infrared sensing unit and the second Fresnel lens unit are both more than three, wherein the three second infrared sensing units are arranged around the outer circumferential direction of the first infrared sensing unit, and the three second Fresnel lens units are arranged around the outer circumferential direction of the first Fresnel lens unit.

8. The Fresnel lens unit sensing apparatus according to claim 7, wherein the second infrared sensing unit and the second Fresnel lens unit are both four, wherein the four second infrared sensing units are symmetrically distributed around the first infrared sensing unit, and the four second Fresnel lens units are symmetrically distributed around the first Fresnel lens unit.

9. The Fresnel lens unit sensing apparatus according to claim 4, 7 or 8, wherein there are more than three second mounting surfaces, and the first mounting surface and the second mounting surface form a quadric groove-shaped, quadratic trapezoidal tapered groove-shaped, or four-sided trapezoidal groove-shaped structure.

10. The Fresnel lens unit sensing apparatus of claim 1, wherein the sensor base is a flexible circuit board, the first infrared sensing unit and the second infrared sensing unit are mounted on a flexible circuit board, and the flexible circuit board is bent or folded such that the second infrared sensing unit is inclined relative to the first infrared sensing unit.
